**Europäisches Patentamt**

**European Patent Office**

**Office européen des brevets**

(11) Veröffentlichungsnummer : **0 048 490**
**B1**

(12) **EUROPÄISCHE PATENTSCHRIFT**

(45) Veröffentlichungstag der Patentschrift :
**02.01.86**

(21) Anmeldenummer : **81107541.5**

(22) Anmeldetag : **22.09.81**

(51) Int. Cl.⁴ : **H 04 L 25/22**, H 04 L 25/26

(54) Schaltungsanordnung zum Umsetzen eines binären Eingangssignals in ein Telegrafiersignal.

(30) Priorität : **24.09.80 DE 3035999**

(43) Veröffentlichungstag der Anmeldung :
**31.03.82 Patentblatt 82/13**

(45) Bekanntmachung des Hinweises auf die Patenterteilung : **02.01.86 Patentblatt 86/01**

(84) Benannte Vertragsstaaten :
**AT BE CH FR GB IT LI SE**

(56) Entgegenhaltungen :
**DE-A- 2 226 757**
**DE-B- 2 721 514**
**FR-A- 2 389 286**

(73) Patentinhaber : **Siemens Aktiengesellschaft**
**Berlin und München Wittelsbacherplatz 2**
**D-8000 München 2 (DE)**

(72) Erfinder : **Skobranek, Norbert, Ing.-grad.**
**Auf den Vogelwiese 7**
**D-8000 München (DE)**

**Beschreibung**

Die Erfindung bezieht sich auf eine Schaltungsanordnung gemäß dem Oberbegriff des Anspruchs 1.

Eine Schaltungsanordnung der vorstehend bezeichneten Art ist bereits bekannt (DE-AS 27 21 514). Bei der betreffenden bekannten Schaltungsanordnung weisen die Konstantstromquellen jeweils einen Transistor auf, der mit seiner Kollektor-Emitter-Strecke zwischen einem Betriebsspannungsanschluß und dem Telegrafiersignalausgang liegt. An den Basen der betreffenden Transistoren liegen Vorspannungsanordnungen umfassende Zener-Dioden, von denen jeweils eine Zener-Diode von einem Strom durchflossen ist. Dieser Strom und der Steuerstrom für den jeweiligen Transistor fließt in einem gesonderten Steuerstromkreis, was bedeutet, daß bei der betreffenden bekannten Schaltungsanordnung ein relativ hoher Steuerleistungsaufwand erforderlich ist. Dieser Steuerleistungsaufwand kommt zu dem Leistungsaufwand noch hinzu, der durch die Abgabe von Telegrafiersignalen gegeben ist. Geht man beispielsweise davon aus, daß die erwähnten Zener-Dioden bei Betriebsspannungen von ± 60 V von einem Strom von 5 mA durchflossen werden müssen, so bedeutet dies, daß bei der betreffenden bekannten Schaltungsanordnung die Betriebsspannungsquellen mit einer Steuerleistung zwischen 300 mW und 900 mW belastet werden. Diese Steuerleistung ist von den Betriebsspannungsquellen also zusätzlich zu der Leistung aufzubringen, die für das Telegrafiersignal benötigt wird, welches von der betreffenden Schaltungsanordnung abzugeben ist. Der Leistungsbedarf ist indessen noch höher, wenn die betrachtete bekannte Schaltungsanordnung doppelt vorgesehen wird, was z. B. beim erdschlußfesten Einfachstrombetrieb notwendig ist. In diesem Fall ist die die Telegrafiersignale führende Leitung an den einander entsprechenden Ausgängen zweier Schaltungsanordnungen der betrachteten Art angeschlossen, wobei in beiden Schaltungsanordnungen jeweils nur eine der beiden vorhandenen Stromquellen getastet wird. Bezüglich der Telegrafiersignalleitung könnte dann auch gesagt werden, daß diese in einer aus Konstantstromquellen bestehenden Brückenschaltung liegt.

Es ist nun auch schon eine Tastschaltung für die Abgabe von Fernschreibzeichen in Form von Einfachstrom- oder Doppelstromzeichen mit vom Belastungswiderstand unabhängigem konstanten Ausgangsstrom bekannt (DE-AS 21 32 616). Bei dieser bekannten Tastschaltung wird die Eingangsspannung einem Transistor zugeführt, der als Emitterfolger geschaltet ist und mit dessen Kollektor ein Belastungswiderstand verbunden ist. Im Emitterkreis des betreffenden Transistors liegt ein Emitterwiderstand und parallel zur Basis-Emitter-Strecke des betreffenden Transistors liegt eine Zener-Diode, die im leitenden Zustand des Transistors die Eingangsspannung auf den Wert der Zener-Spannung begrenzt. Diese eine Konstantstromquelle darstellende Tastschaltung wird für einen Doppelstrombetrieb in einer Gegentakt-Transistorschaltungsanordnung verwendet, bei der im Steuerkreis der Transistoren der Konstantstromquellen gesonderte Transistoren vorgesehen sind, von denen jeweils nur einer in den leitenden Zustand zu steuern ist, während der jeweils andere Transistor in den gesperrten Zustand zu steuern ist. Auch bei dieser bekannten Schaltungsanordnung ist ein relativ hoher Steuerleistungsaufwand erforderlich, der sich dadurch ergibt, daß die erwähnten Zener-Dioden von Steuerströmen durchflossen werden, welche den Betriebsspannungsquellen entnommen werden. Unter Zugrundelegung einer Betriebsspannung von ± 60 V ist bei einem für den Betrieb der Zener-Dioden erforderlichen Strom von 5 mA eine Steuerleistung von 300 mW bei der betreffenden bekannten Schaltungsanordnung erforderlich, wenn diese im Doppelstrombetrieb arbeitet. Beim Einfachstrombetrieb — also bei Verwendung von zwei einander entsprechenden Schaltungsanordnungen in der oben betrachteten Art — ergibt sich somit ein Steuerleistungsaufwand von 600 mW.

Der Erfindung liegt nun die Aufgabe zugrunde, einen Weg zu zeigen, wie bei einer Schaltungsanordnung der eingangs genannten Art mit wesentlich geringeren die Betriebsspannungsquellen gesondert belastenden Steuerleistungen ausgekommen werden kann als bei den bisher bekannten Schaltungsanordnungen.

Gelöst wird die vorstehend aufgezeigte Aufgabe durch Schaltungsanordnung, wie sie im Anspruch 1 gekennzeichnet ist.

Die Erfindung bringt den Vorteil mit sich, daß mit besonders geringem schaltungstechnischen Aufwand erreicht ist, daß die durch die Vorspannungsanordnungen erforderlichen Steuerleistungen die Betriebsspannungsquellen nicht zusätzlich zu den Leistungen belasten, die für die Telegrafiersignale aufzuwenden sind. Gemäß der Erfindung fließen nämlich die für die Vorspannungsanordnungen bereitzustellenden Ströme nicht in irgendwelchen gesonderten Steuerkreisen, sondern sie fließen vielmehr über den Telegrafiersignalausgang, über den der Telegrafiersignalstrom zu fließen hat. Mit anderen Worten ausgedrückt heißt dies, daß die betreffenden Steuerströme einen Teil der Telegrafiersignalströme ausmachen. Von Vorteil ist ferner, daß die Schaltungsanordnung gemäß der Erfindung relativ einfach und kostengünstig als Gleichstromtelegrafie-Sendeschaltung für Einfach- oder Doppelstrombetrieb realisiert werden kann. In diesem Zusammenhang hat sich gezeigt, daß ohne weiteres ein Betrieb bei 120 V/40 mA bzw. bei ± 48 ... 80 V/20 mA mit automatischer Stromregelung möglich ist.

Vorzugsweise ist jede Vorspannungsanordnung durch eine gesonderte Hilfs-Konstantstromquelle gebildet, die wenigstens einen Transistor enthält, in dessen Basiskreis eine Vorspannungserzeugungseinrichtung liegt. Diese Maßnahme bringt den Vorteil einer besonders einfachen Schaltungsrealisierung der Vorspannungsanordnungen mit sich.

Von Vorteil bei der gerade betrachteten Ausgestaltung der Erfindung ist es ferner, wenn die Transistoren jeder Konstantstromquelle und der mit dieser verbundenen Hilfs-Konstantstromquelle durch Transistoren entgegengesetzten Leitfähigkeitstyps gebildet sind, die mit ihren Basen und Kollektoren jeweils entsprechend einer Vierschicht-Halbleiteranordnung miteinander verbunden sind. Hierdurch ergibt sich der Vorteil, daß — wie dies weiter unten noch näher ersichtlich werden wird — die Konstantstromquellen zusammen mit den die erwähnten Vorspannungsanordnungen darstellenden Hilfs-Konstantstromquellen jeweils gemeinsam einfach getastet werden können.

Zweckmäßigerweise sind die Vorspannungserzeugungseinrichtungen durch Zener-Dioden gebildet. Dies bringt den Vorteil eines besonders geringen schaltungstechnischen Aufwands mit sich.

Es ist aber auch möglich, die Vorspannungserzeugungseinrichtungen durch Diodenstrecken von wenigstens zwei mit entgegengesetzter Polarität einander parallel geschalteten Dioden zu bilden. Hierdurch ergibt sich der Vorteil eines besonders günstigen Betriebs der gesamten Schaltungsanordnung, wie dies weiter unten noch näher ersichtlich werden wird.

Vorzugsweise sind die zuletzt erwähnten, eine Vorspannungserzeugungseinrichtung bildenden Diodenstrecken durch einen Darlington-Transistor gebildet. Diese Maßnahme bringt den Vorteil eines besonders geringen schaltungstechnischen Aufwands mit sich.

Zweckmäßigerweise ist der Transistor der genannten einen Konstantstromquelle emitterseitig mit dem Telegrafiersignalausgang verbunden, und der Transistor der genannten anderen Konstantstromquelle ist kollektorseitig über das Vorspannungselement der erstgenannten Konstantstromquelle mit dem Telegrafiersignalausgang verbunden. Dies bringt den Vorteil mit sich, daß für die Konstantstromquellen Transistoren gleichen Leitfähigkeitstyps und damit mit gleichen Eigenschaften verwendet werden können, wobei es außerdem relativ einfach möglich ist, bei Ansteuerung eines der betreffenden Transistoren den anderen Transistor stets so mitzusteuern, daß der zweite Transistor sich im leitenden Zustand befindet, wenn sich der erste Transistor im gesperrten Zustand befindet und daß sich der zweite Transistor im gesperrten Zustand befindet, wenn sich der erste Transistor im leitenden Zustand befindet.

Zweckmäßigerweise ist in der Verbindung zwischen der Kollektorseite des Transistors der zuvor genannten anderen Konstantstromquelle und dem Telegrafiersignalausgang eine im Basiskreis des Transistors der genannten einen Konstantstromquelle als Vorspannungselement vorgesehene Zener-Diode vorhanden. Dies bringt den Vorteil mit sich, die bei im leitenden Zustand des Transistors der genannten anderen Konstantstromquelle an der erwähnten Zener-Diode abfallende Durchlaßspannung zur sicheren Sperrung des mit dieser Zener-Diode verbundenen Transistors der genannten einen Konstantstromquelle auszunutzen.

Der Transistor der der zuvor genannten anderen Konstantstromquelle zugehörigen Hilfs-Konstantstromquelle kann mit seinem Emitter über einen ohmschen Widerstand direkt mit dem Telegrafiersignalausgang verbunden sein. Dies bringt den Vorteil mit sich, daß für die Vorspannungserzeugungseinrichtung der betreffenden Hilfs-Konstantstromquelle keine zusätzliche Zener-Diode bzw. Diodenstrecke notwendig ist.

Zweckmäßigerweise ist zur Potentialtrennung der Eingangssignalanschlüsse und des Telegrafiersignalausgangs als Eingangssignal-Zuführungseinrichtung ein Optokoppler vorgesehen. Dies bringt den Vorteil der Potentialtrennung und einer besonders einfachen Möglichkeit der Zuführung des Eingangssignals mit sich. Im übrigen kann in vorteilhafter Weise ein besonders kostengünstiger Optokoppler eingesetzt werden, d. h. ein Optokoppler mit relativ niedriger Kollektor-Emitter-Sperrspannung.

Für einen Einfachstrombetrieb mit Umpolung (beim Vermittlungsbetrieb) ist es zweckmäßig, die Schaltungsanordnung gemäß der Erfindung zweifach vorzusehen und an den dann insgesamt vorhandenen zwei Telegrafiersignalausgängen bzw. -klemmen eine Übertragungsleitung mit ihren beiden Enden bzw. Adern anzuschließen. Diese Maßnahme bringt den Vorteil eines besonders sicheren Einfachstrombetriebs mit sich, bei dem jedoch im Unterschied zu dem Einfachstrombetrieb mit den eingangs betrachteten bekannten Schaltungsanordnungen mit einem wesentlich geringeren Leistungsbedarf bezüglich der Betriebsspannungsquellen ausgekommen werden kann.

Bei Ausgestaltung der Erfindung in der im Anspruch 12 angegebenen Weise ergibt sich der Vorteil eines besonders sicheren und schnellen Betriebs. Anhand von Zeichnungen wird die Erfindung nachstehend beispielsweise näher erläutert.

Figur 1 zeigt eine Gleichstromtelegrafie-Sendeschaltung darstellende Schaltungsanordnung, anhand der das Prinzip der vorliegenden Erfindung erläutert wird.

Figur 2 zeigt eine Schaltungsmodifikation eines Teiles der in Fig. 1 dargestellten Schaltungsanordnung.

Figur 3 zeigt eine weitere Schaltungsmodifikation eines Teiles der in Fig. 1 dargestellten Schaltungsanordnung.

Figur 4 zeigt eine Schaltungsanordnung gemäß der Erfindung.

Figur 5 zeigt eine weitere Schaltungsanordnung gemäß der Erfindung.

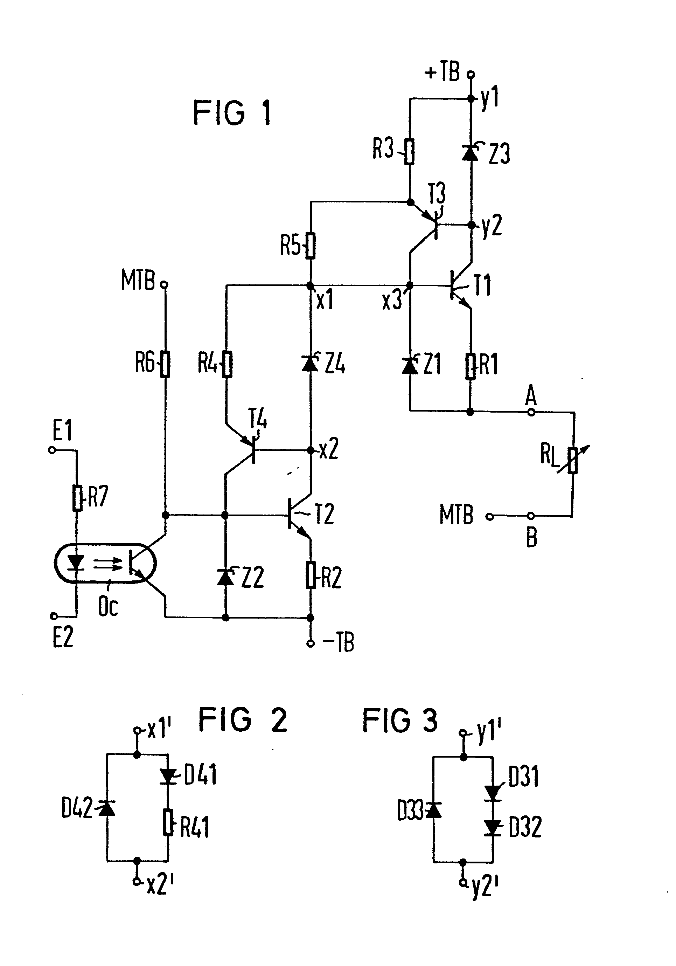

Die in Fig. 1 dargestellte Schaltungsanordnung weist unter anderem zwei Konstantstromquellen auf, zu deren einer ein Transistor T1 gehört und zu deren anderer ein Transistor T2 gehört. Diese beiden Transistoren sind vom selben Leitfähigkeitstyp, im vorliegenden Fall vom npn-Leitfähigkeitstyp.

Die mit dem Transistor T1 gebildete Konstantstromquelle umfaßt ferner einen im Emitterkreis des Transistors T1 liegenden Widerstand R1 und eine im Basiskreis dieses Transistors T1 liegende Zener-Diode Z1. Die Zener-Diode Z1 ist dabei so gepolt, daß sie für den Transistor T1 in den Sperrzustand steuernde negative Signale in Durchlaßrichtung beansprucht ist. Die mit dem Transistor T2 gebildete Konstantstromquelle umfaßt in entsprechender Weise einen Widerstand R2, der im Emitterkreis des Transistors T2 liegt, und eine Zener-Diode Z2, die im Basiskreis des Transistors T2 mit solcher Polung liegt, daß sie für den Transistor T2 in den nicht leitenden Zustand steuernde Signale in Durchlaßrichtung beansprucht ist. Die Zener-Spannungen der Zener-Dioden sind zusammen mit den Emitterwiderständen bzw. den Emitterspannungen der betreffenden Transistoren so gewählt, daß die Transistoren T1 bzw. T2 im leitenden Zustand die jeweils geforderten Ströme abgeben können.

Die Transistoren T1, T2 der vorstehend betrachteten Konstantstromquellen weisen noch gesonderte Vorspannungsanordnungen auf, über die die erforderlichen Vorspannungen für die Transistoren T1 bzw. T2 zur Verfügung gestellt werden. Diese Vorspannungsanordnungen sind im vorliegenden Fall ebenfalls durch Konstantstromquellen gebildet, die jedoch im Unterschied zu den vorstehend betrachteten Konstantstromquellen als Hilfs-Konstantstromquellen bezeichnet werden. Die der Konstantstromquelle mit dem Transistor T1 zugehörige Hilfs-Konstantstromquelle weist einen Transistor T3 auf, in dessen Emitterkreis ein Widerstand R3 liegt und in dessen Basiskreis eine Zener-Diode 23 liegt. Die andere in Fig. 1 noch vorgesehene Hilfs-Konstantstromquelle weist einen Transistor T4 auf, in dessen Emitterkreis ein Widerstand R4 liegt und in dessen Basiskreis eine Zener-Diode Z4 liegt.

Wie aus Fig. 1 hervorgeht, sind die Transistoren T3 und T4 ebenfalls vom selben Leitfähigkeitstyp, der jedoch entgegengesetzt ist zu dem Leitfähigkeitstyp der Transistoren T1, T2. Die Transistoren T1 bzw. T2 der Konstantstromquellen und die Transistoren T3 bzw. T4 der zugehörigen Hilfs-Konstantstromquellen sind dabei mit ihren Kollektoren und Basen derart miteinander verbunden, daß sich jeweils eine Vierschicht-Halbleiteranordnung ergibt. Bezüglich der Zener-Dioden Z3, Z4 ist noch anzumerken, daß diese für die Kollektorströme des jeweils zugehörigen Konstantstromquellen-Transistors T1 bzw. T2 im Zener-Bereich betrieben werden. Die Zener-Spannungen der betreffenden Zener-Dioden Z3, Z4 sind dabei in entsprechender Weise gewählt, wie dies bezüglich der Zener-Dioden Z1, Z2 oben erwähnt worden ist.

Die vorstehend betrachteten Anordnungen, bestehend jeweils aus einer Konstantstromquelle und einer mit dieser verbundenen Hilfs-Konstantstromquelle, sind nun zwischen zwei Schaltungspunkten X1 und X3 direkt miteinander verbunden. Zwischen dem Schaltungspunkt X1 und dem Emitter des Transistors T3 ist außerdem ein Widerstand R5 vorgesehen, bei dem es sich um einen hochohmigen Anlaufwiderstand handelt.

Bei der bisher betrachteten Schaltungsanordnung sind die Transistoren T1 bzw. T2 der Konstantstromquellen zusammen mit ihren Vorspannungsanordnungen — das sind die erwähnten Hilfs-Konstantstromquellen mit den Transistoren T3 bzw. T4 — in Reihe liegend zwischen jeweils einem der Betriebsspannungsanschlüsse + TB bzw. − TB und einer Telegrafiersignalklemme A angeordnet. Mit dieser Telegrafiersignalklemme A ist die Konstantstromquelle mit dem Transistor T1 direkt verbunden. Die andere Konstantstromquelle mit dem Transistor T2 ist mit dieser Telegrafiersignalklemme A über die Zener-Diode Z1 verbunden, die im Basiskreis des Transistors T1 liegt. An der erwähnten Telegrafiersignalklemme A ist eine durch einen einstellbaren Widerstand $R_L$ angedeutete Übertragungsleitung mit ihrem einen Ende angeschlossen. Das andere Ende der betreffenden Übertragungsleitung ist in Fig. 1 mit (B) bezeichnet. An diesem anderen Ende (B) der betreffenden Übertragungsleitung kann entweder eine der in Fig. 1 dargestellten Schaltungsanordnung entsprechende Schaltungsanordnung mit ihrem Telegrafiersignalausgang angeschlossen sein, oder aber das betreffende andere Ende der Übertragungsleitung kann an einem Betriebsspannungsanschluß MTB liegen, der beispielsweise der Mittelanschluß zweier Betriebsspannungsquellen ist, die mit ihren anderen Anschlüssen an + TB bzw. − TB gemäß Fig. 1 angeschlossen sind. Bezüglich des in Fig. 1 angedeuteten Widerstands $R_L$ sei noch angemerkt, daß dieser auch einen Telegrafiersignalempfänger einschließt.

Die in Fig. 1 dargestellte Schaltungsanordnung weist noch einen Optokoppler Oc auf, der mit seiner ein Lichtabgabeelement darstellenden Diode über einen Schutzwiderstand R7 an Eingangsanschlüssen E1 bzw. E2 angeschlossen ist, denen ein binäres Eingangssignal zugeführt wird, welches in ein Telegrafiersignal umzusetzen ist. Der Transistor des Optokopplers Oc ist mit seiner Kollektor-Emitter-Strecke der bereits betrachteten Zener-Diode Z2 parallel geschaltet. Außerdem ist der Kollektor des Transistors des Optokopplers Oc über einen Kollektorwiderstand R6 an einem Schaltungspunkt angeschlossen, bei dem es sich um den Schaltungspunkt MTB handeln kann, also um den gleichen Schaltungspunkt, an dem auch die Übertragungsleitung $R_L$ gemäß Fig. 1 angeschlossen sein kann. Da am Schaltungspunkt MTB ein positives Potential bezogen auf den Schaltungspunkt − TB vorhanden ist, wird die Kollektor-Emitter-Spannung des Transistors des Optokopplers Oc in dessen gesperrten Zustand durch die Zener-Spannung der Zener-Diode Z2 begrenzt. Damit dürfte ersichtlich sein, daß — wie dies oben bereits angedeutet worden ist — hier mit einem relativ preisgünstigen Optokoppler ausgekommen werden kann.

Nachdem zuvor der Aufbau der in Fig. 1 dargestellten Schaltungsanordnung erläutert worden ist, wird nunmehr die Arbeitsweise dieser Schaltungsanordnung erläutert. Wie bereits erwähnt, dient die betreffende Schaltungsanordnung zum Umsetzen eines binären Eingangssignals in ein Telegrafiersignal. Das binäre Eingangssignal wird den Eingängen E1, E2 als Signal mit jeweils einem von zwei möglichen Pegeln zugeführt. Bei dem einen Eingangssignalpegel ist der Optokoppler Oc derart angesteuert, daß sein Transistor leitend ist ; bei dem anderen Eingangssignalpegel ist der betreffende Transistor des Optokopplers Oc gesperrt. Bei leitendem Transistor des Optokopplers Oc ist der Transistor T2 gesperrt, womit auch der Transistor T4 gesperrt ist. Dadurch befindet sich nunmehr am Schaltungspunkt x3 über den Anlaufwiderstand R5 ein solches Steuerpotential, daß der Transistor T1 in den leitenden Zustand gelangt. Zugleich gelangt auch der Transistor T3 in den leitenden Zustand. Über die den Transistor T3 umfassende Vorspannungsanordnung wird durch die Zener-Diode Z1 ein Strom von beispielsweise 5 mA geleitet. Dieser Strom fließt von dem Betriebsspannungsanschluß + TB über den Transistor T3 und die Zener-Diode Z1 zum Telegrafiersignalausgang A hin und damit über die Übertragungsleitung R$_L$. Zu diesem Strom kommt noch der Konstantstrom, den der Transistor T1 über seine Kollektor-Emitter-Strecke abgibt. Ist ein Gesamtstrom von beispielsweise 40 mA am Telegrafiersignalausgang A gefordert, so braucht der Transistor T1 der Konstantstromquelle lediglich einen Strom von 35 mA zu liefern. Bei der Aufteilung der Ströme auf die Zenerdioden und die Basen der Transistoren wurden die relativ kleinen Basisströme vernachlässigt. Sowohl der Strom von 35 mA als auch der zuvor erwähnte Strom von 5 mA sind dem Betriebsspannungsanschluß + TB entnommen, und beiden Ströme fließen gemeinsam über die Übertragungsleitung R$_L$. Dies bedeutet, daß bezüglich des Transistors T1 der einen Konstantstromquelle keine zusätzliche Steuerleistung bereitzustellen ist, d. h. zusätzlich bezogen auf die Leistung, die für die Abgabe des entsprechenden Telegrafiersignals aufzuwenden ist. Dabei ist allerdings die Leistung unberücksichtigt geblieben, die der im leitenden Zustand befindliche Optokoppler Oc verbraucht. Diese Leistung ist in der Tat zu vernachlässigen. Nimmt man beispielsweise einen Strom von 0,1 mA an, der den Widerstand R6 durchfließt und nimmt man ferner an, daß am Schaltungspunkt MTB eine Spannung von 0 V liegt und am Schaltungspunkt − TB eine Spannung von − 60 V, so bedeutet dies einen zusätzlichen Steuerleistungsaufwand von 6 mW.

Nunmehr sei angenommen, daß der Optokoppler Oc derart angesteuert wird, daß sein Transistor gesperrt wird. In diesem Fall führt die Basis des Transistors T2 ein positives Potential bezogen auf den Emitter dieses Transistors. Dadurch gelangen der Transistor T2 und der Transistor T4 jeweils in den leitenden Zustand. Der Strom fließt in diesem Fall von dem mit dem Leitungsende (B) verbundenen Betriebsspannungsanschluß MTB über die Übertragungsleitung R$_L$, die im Durchlaßbetrieb betriebene Zener-Diode Z1 sowie über die Kollektor-Emitter-Strecken der Transistoren T2, T4 zu dem Betriebsspannungsanschluß − TB hin. Durch die im Durchlaßbetrieb ausgenutzte Zener-Diode Z1 liegt am Schaltungspunkt x3 dabei eine Spannung, die um ca. 0,7 V negativer ist als die Spannung am Telegrafiersignalausgang A. Dadurch wird der Transistor T1 im nichtleitenden Zustand gehalten, und zusammen mit diesem Transistor wird auch der Transistor T3 im nichtleitenden Zustand gehalten.

Der von der nunmehr leitenden Transistoranordnung mit den Transistoren T2 und T4 über die Übertragungsleitung R$_L$ aufgenommene Strom teilt sich nun auf in den Strom, der über die Vorspannungsanordnung für den Transistor T2 fließt — das sind beispielsweise 5 mA — und den Strom, der über die Kollektor-Emitter-Strecke des Konstantstromquellen-Transistors T2 fließt — das sind beispielsweise 35 mA. Zusätzlich übernimmt der Transistor T2 den Strom, der über den Widerstand R5 fließt. Abgesehen von der dadurch bedingten geringfügigen Steuerleistung von beispielsweise 6 mW braucht also die zuletzt betrachtete Transistoranordnung mit den Transistoren T2 und T4 lediglich noch die durch den Widerstand R6 bedingte Steuerleistung von z. B. 6 mW, also insgesamt hier 12 mW.

Wird bei der in Fig. 1 dargestellten Schaltungsanordnung der Optokoppler Oc bzw. der Transistor dieses Optokopplers wieder leitend, so muß er bis zur völligen Sperrung des Transistors T2 den über den Transistor T4 bereitgestellten Strom für die Vorspannungsanordnung, also die Zener-Diode Z2, übernehmen. Dieser Strom beträgt beispielsweise 5 mA. Um ohne eine derartige Stromübernahme seitens des Optokopplers Oc auszukommen, kann zwischen den Schaltungspunkten x1 und x2 gemäß Fig. 1 die dort vorgesehene Zener-Diode Z4 ersetzt werden durch die in Fig. 2 angedeutete Schaltung, deren Schaltungspunkte x1′, x2′ mit den Schaltungspunkten x1 bzw. x2 gemäß Fig. 1 zu verbinden sind. Wie ersichtlich, ist zwischen den Schaltungspunkten x1′, x2′ gemäß Fig. 2 die Reihenschaltung einer Diode D41 und eines Widerstands R41 vorgesehen, der eine Diode 42 mit einer zur Polung der Diode D41 entgegengesetzten Polung parallel geschaltet ist. Der Widerstand R41 ist dabei so gewählt, daß an ihm bei Fließen eines Stromes von z. B. 35 mA in Durchlaßrichtung durch die Diode D41 eine Spannung von ca. 0,7 V abfällt. Wird die betreffende Schaltungsanordnung gemäß Fig. 2 bei der Schaltungsanordnung gemäß Fig. 1 verwendet, so wird mit beginnender Sperrung des Transistors T2 die Bezugsspannung für den Transistor T4 abnehmen, d. h. die Spannung zwischen den Schaltungspunkten x1 und x2 gemäß Fig. 1. Damit wird aber auch der über die Kollektor-Emitter-Strecke des Transistors T4 fließende Strom abnehmen, der von der Transistorstrecke des Optokopplers Oc zu übernehmen ist. Daraus wird ersichtlich, daß die Sperrung der betrachteten Transistoranordnung begünstigt wird und daß damit auch die Anforderungen an den Wirkungsgrad des Optokopplers Oc gesenkt sind.

Durch eine der vorstehend betrachteten Maßnahme ähnliche Maßnahme kann bei der Schaltungsanordnung gemäß Fig. 1 auch die dort vorgesehene Zener-Diode Z3 durch eine entsprechende Diodenschaltung ersetzt werden. In Fig. 3 ist eine solche Diodenschaltung gezeigt. Diese besteht aus zwei mit gleicher Polung in Reihe geschalteten Dioden D31, D32 und einer dazu antiparallel geschalteten Diode D33. Mit ihren Anschlüssen y1' und y2' kann die in Fig. 3 dargestellte Schaltungsanordnung anstelle der in Fig. 1 vorgesehenen Zener-Diode Z3 zwischen den dort eingetragenen Schaltungsstellen y1 und y2 eingesetzt werden. Die so vorgenommene Verkleinerung der Bezugsspannung für den Transistor T3 vergrößert den Regelbereich der die Transistoren T1 und T3 umfassenden Konstantstromquellen und damit die überbrückbare Leitungslänge der Übertragungsleitung. Das gleiche gilt auch für Fig. 2.

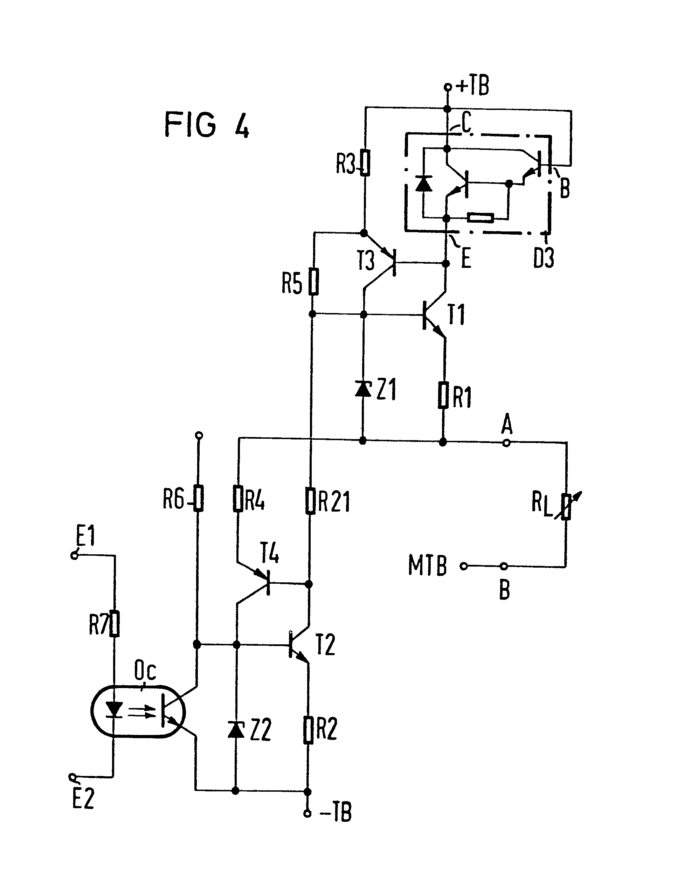

In Fig. 4 ist eine weitere Schaltungsanordnung gemäß der Erfindung gezeigt. Diese Schaltungsanordnung unterscheidet sich von der in Fig. 1 dargestellten Schaltungsanordnung im wesentlichen dadurch, daß der Emitterwiderstand R4 des Transistors T4 mit seinem dem Emitter des betreffenden Transistors T4 abgewandten Ende nicht mit der Basis des Transistors T1 verbunden ist, sondern direkt mit dem Telegrafiersignalausgang A. Dadurch wird die Durchlaßspannung der Zener-Diode Z1 im vorliegenden Fall gleichzeitig als Teil der Referenzspannung für den Transistor T4 mitausgenutzt. Bezogen auf die Diodenanordnung gemäß Fig. 2 bedeutet dies, daß die dort vorgesehene Reihenschaltung aus der Diode D41 und dem Widerstand R41 gemäß Fig. 4 durch die Zener-Diode Z1 und den Widerstand R21 gebildet ist. Die gemäß Fig. 2 vorgesehene Diode D42 kann, wie dies bei der Schaltungsanordnung gemäß Fig. 4 der Fall ist, weggelassen werden. Voraussetzung dafür ist allerdings, daß die Zener-Spannung der Zener-Diode Z1 kleiner ist als die zulässige Basis-Emitter-Durchbruchspannung des Transistors T4.

Ein weiterer Unterschied zwischen der in Fig. 4 dargestellten Schaltungsanordnung und der in Fig. 1 dargestellten Schaltungsanordnung besteht noch darin, daß die Zener-Diode Z3 gemäß Fig. 1 hier durch einen Darlington-Transistor D3 ersetzt ist. Der innere Aufbau dieses Darlington-Transistors D3 ist durch eine gestrichelte Linie in Fig. 4 umrahmt. Als externe Anschlüsse sind lediglich eine Basis B, ein Emitter E und ein Kollektor C vorhanden. Wie aus Fig. 4 ersichtlich ist, sind die Basis B und der Kollektor C des Darlington-Transistors D3 miteinander verbunden an dem Betriebsspannungsanschluß + TB angeschlossen. Der Emitter E des Darlington-Transistors D3 ist mit dem Schaltungspunkt verbunden, an dem der Kollektor des Transistors T1 und die Basis des Transistors T3 gemeinsam angeschlossen sind. Hinsichtlich der Dioden-Strecken entspricht der Darlington-Transistor D3 der in Fig. 3 dargestellten Diodenanordnung.

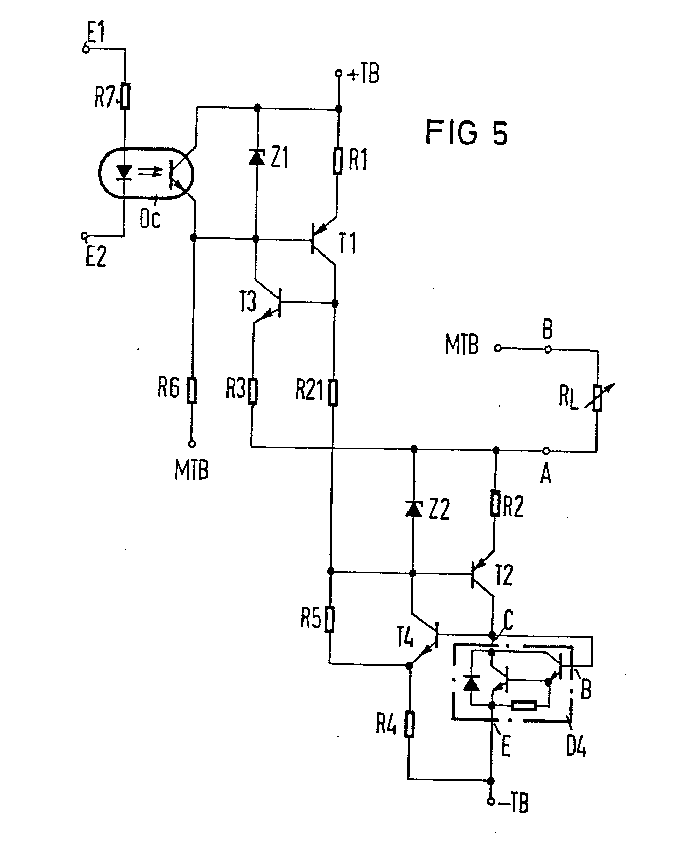

In Fig. 5 ist eine noch weitere Schaltungsanordnung gemäß der Erfindung gezeigt. Diese Schaltungsanordnung entspricht der in Fig. 4 dargestellten Schaltungsanordnung, wobei allerdings die Transistoren der Konstantstromquellen und der Hilfs-Konstantstromquellen durch solche jeweils des anderen Leitfähigkeitstyps bezogen auf Fig. 4 ersetzt sind. Demgemäß sind bei der Schaltungsanordnung gemäß Fig. 5 die Transistoren T1 und T2 vom pnp-Leitfähigkeitstyp ; und die Transistoren T3, T4 sind vom npn-Leitfähigkeitstyp. Abgesehen von diesen Unterschieden stimmen die Schaltungsanordnungen gemäß Fig. 4 und 5 miteinander überein. Die Arbeitsweise und die Funktionsprinzipien der betreffenden Schaltungsanordnungen sind demgemäß auch gleich, weshalb hier nicht nochmals darauf eingegangen zu werden braucht.

Die vorstehende Erläuterung der insbesondere in den Fig. 1, 4 und 5 gezeigten Schaltungsanordnungen hat gezeigt, daß diese jeweils ein binäres Eingangssignal in ein Telegrafiersignal umsetzen, dessen Signalstrom in jeweils einer von zwei Richtungen über die Übertragungsleitung $R_L$ fließt. Damit arbeiten also die beschriebenen Schaltungsanordnungen als Gleichstromtelegrafie-Sendeschaltungen für Doppelstromsignale. Besteht nun der Wunsch, von einer derartigen Sendeschaltung lediglich Einfachstromsignale abzugeben, so genügt es an sich, eine der erläuterten Konstantstromquellen zusammen mit ihrer zugehörigen Hilfs-Konstantstromquelle zu verwenden, ihr dann über eine Eingangssignal-Zuführungsschaltung das binäre Eingangssignal zuzuführen und sie ausgangsseitig über den Telegrafiersignalausgang mit der Übertragungsleitung zu verbinden. In diesem Fall würden die oben erläuterten Vorteile hinsichtlich des Steuerleistungsaufwands voll erhalten bleiben. Es ist aber auch möglich, eine Gleichstromtelegrafie-Sendeschaltung für Einfachstromsignale in der Weise zu realisieren, daß man eine Schaltungsanordnung, wie sie in Fig. 1, 4 bzw. 5 gezeigt ist, zweifach vorsieht und die Übertragungsleitung $R_L$ dann an den beiden entsprechenden Telegrafiersignalausgängen der beiden Schaltungsanordnungen anschließt. Diese beiden Schaltungsanordnungen werden dann aber zueinander invers angesteuert, wie dies eingangs bereits angedeutet worden ist. Von einer derartigen Schaltungskonzeption wird man vorzugsweise dann Gebrauch machen, wenn es darum geht, eine Umpolung der Übertragungsleitung für den Vermittlungsbetrieb zu ermöglichen und außerdem einen kurzschlußfesten und erdschlußfesten Betrieb sicherzustellen, d. h. einen Betrieb, bei dem ein Kurzschluß der Übertragungsleitung oder ein Erdschluß, d. h. ein Schluß zum Schaltungspunkt MTB hin, keine nachteiligen Auswirkungen auf die gesamte Schaltungsanordnung haben soll, und zwar insbesondere auf die Betriebsspannungsquellen und die Übertragungsleitung $R_L$.

## Patentansprüche

1. Schaltungsanordnung zum Umsetzen eines binären Eingangssignals in ein Telegrafiersignal, mit Konstantstromquellen (T1, Z1, R1 bzw. T2, Z2, R2), die jeweils wenigstens ein Vorspannungselement (Z1 bzw. Z2) und wenigstens einen Transistor (T1 bzw. T2) mit gesonderter Vorspannungsanordnung (T3, Z3, R3 bzw. T4, Z4, R4) enthalten, mit einer Eingangssignal-Zuführungseinrichtung (Oc), die das Eingangssignal an die Basis wenigstens eines der Transistoren (T2) anlegt, mit Betriebsspannungen (+ TB, − TB) unterschiedlicher Polarität, welche an den Konstantstromquellen (T1, Z1, R1, bzw. T2, Z2, R2) anliegen, und mit einem Telegrafiersignal-Ausgang (A), mit dem die Konstantstromquellen (T1, Z1, R1 bzw. T2, R2, Z2) verbunden sind, dadurch gekennzeichnet, daß der Transistor (T1 bzw. T2) der einen Konstantstromquelle (T1, Z1, R1 bzw. T2, Z2, R2) zusammen mit seiner Vorspannungsanordnung (T3, Z3, R3 bzw. T4, Z4, R4) lediglich zwischen einem ersten Betriebsspannungsanschluß (+ TB bzw. − TB) und dem Telegrafiersignal-Ausgang (A) angeordnet ist, und daß der mit der Eingangssignal-Zuführungseinrichtung (Oc) verbundene Transistor (T2 bzw. T1) der anderen Konstantstromquelle (T2, Z2, R2 bzw. T1, Z1, R1) zusammen mit seiner Vorspannungsanordnung (T4, Z4, R4 bzw. T3, Z3, R3) lediglich zwischen einem zweiten Betriebsspannungsanschluß (− TB bzw. + TB) und über das zu der erstgenannten Konstantstromquelle (T1, Z1, R1 bzw. T2, Z2, R2) gehörende Vorspannungselement (Z1 bzw. Z2) an dem Telegrafiersignal-Ausgang (A) angeschlossen ist.

2. Schaltungsanordnung nach Anspruch 1, dadurch gekennzeichnet, daß jede Vorspannungsanordnung durch eine gesonderte Hilfs-Konstantstromquelle (T3, Z3, R3 ; T4, Z4, R4) gebildet ist, die wenigstens einen Transistor (T3 ; T4) enthält, in dessen Basiskreis eine Vorspannungserzeugungseinrichtung (Z3 ; Z4) liegt.

3. Schaltungsanordnung nach Anspruch 2, dadurch gekennzeichnet, daß die Transistoren (T1, T3 ; T2, T4) jeder Konstantstromquelle und der mit dieser verbundenen Hilf-Konstantstromquelle durch Transistoren entgegengesetzten Leitfähigkeitstyps gebildet sind, die mit ihren Basen und Kollektoren jeweils entsprechend einer Vierschicht-Halbleiteranordnung miteinander verbunden sind.

4. Schaltungsanordnung nach Anspruch 2 oder 3, dadurch gekennzeichnet, daß die Vorspannungserzeugungseinrichtungen durch Zener-Dioden (Z3, Z4) gebildet sind.

5. Schaltungsanordnung nach Anspruch 2 oder 3, dadurch gekennzeichnet, daß die Vorspannungserzeugungseinrichtungen durch Diodenstrecken von wenigstens zwei mit entgegengesetzter Polarität einander parallelgeschalteten Dioden (D41, D42 , D31, D32, D33) gebildet sind.

6. Schaltungsanordnung nach Anspruch 5, dadurch gekennzeichnet, daß die eine Vorspannungserzeugungseinrichtung bildenden Diodenstrecken (D31, D32, D33) durch einen Darlington-Transistor (D3, D4) gebildet sind.

7. Schaltungsanordnung nach einem der Ansprüche 1 bis 6, dadurch gekennzeichnet, daß der Transistor (T1) der genannten einen Konstantstromquelle emitterseitig mit dem Telegrafiersignalausgang (A) verbunden ist und daß der Transistor (T2) der genannten anderen Konstantstromquelle kollektorseitig über das Vorspannungselement (Z1) der erstgenannten Konstantstromquelle mit dem Telegrafiersignal-Ausgang (A) verbunden ist.

8. Schaltungsanordnung nach Anspruch 7, dadurch gekennzeichnet, daß in der Verbindung zwischen der Kollektorseite des Transistors (T2) der genannten anderen Konstantstromquelle und dem Telegrafiersignal-Ausgang (A) eine im Basiskreis des Transistors (T1) der genannten einen Konstantstromquelle als Vorspannungselement vorgesehene Zenerdiode (Z1) liegt.

9. Schaltungsanordnung nach Anspruch 8, dadurch gekennzeichnet, daß der Transistor (T4 in Fig. 3 ; T3 in Fig. 5) der der genannten anderen Konstantstromquelle zugehörenden Hilfs-Konstantstromquelle mit seinem Emitter über einen ohmschen Widerstand (R4 bzw. R3) direkt mit dem Telegrafiersignal-Ausgang (A) verbunden ist.

10. Schaltungsanordnung nach einem der Ansprüche 1 bis 9, dadurch gekennzeichnet, daß als Eingangssignal-Zuführungseinrichtung ein Optokoppler (Oc) vorgesehen ist.

11. Schaltungsanordnung nach einem der Ansprüche 1 bis 10, dadurch gekennzeichnet, daß sie zweifach vorgesehen ist und daß an den insgesamt vorhandenen zwei Telegrafiersignalklemmen (A, B) eine Übertragungsleitung ($R_L$) mit ihren beiden Adern angeschlossen ist.

12. Schaltungsanordnung nach einem der Ansprüche 1 bis 11, dadurch gekennzeichnet, daß ein der genannten einen Konstantstromquelle (T1, Z1, R1) zugehöriger Transistor (T1) basisseitig über einen Anlaufwiderstand (R5) an einer Spannungsquelle (+ TB) angeschlossen ist.

## Claims

1. A circuit arrangement for transforming a binary input signal into a telegraph signal, comprising constant current sources (T1, Z1, R1 or T2, Z2, R2 as the case may be) with at least one respective bias element (Z1 or Z2 as the case may be) and at least one transistor (T1 or T2 as the case may be) having a separate bias arrangement (T3, Z3, R3 or T4, Z4, R4 as the case may be), comprising an input signal feeding device (Oc) which connects the input signal to the base of at least one of the transistors (T2), comprising operating voltages (+ TB, − TB) of different polarity connected to the constant current sources (T1, Z1, R1 or T2, Z2, R2), and comprising a telegraph signal output (A), to which the constant current sources (T1, Z1, R1 or T2, Z2, R2) are connected, characterised in that the transistor (T1 or T2) of the one constant current source (T1, Z1, R1 or T2, Z2, R2) together with its bias arrangement (T3, Z3, R3 or T4, Z4, R4) is only arranged between a first operating voltage terminal (+ TB or − TB) and the telegraph signal output (A), and that the transistor (T2 or T1) connected to the input signal feeding device (Oc), of the other constant current source (T2, Z2, R2 or T1, Z1, R1) together with its bias arrangement (T4, Z4, R4 or T3, Z3, R3) is only connected to the telegraph signal output (A) between a second operating voltage terminal (− TB or + TB) and by means of the bias element (Z1 or Z2) assigned to the first-mentioned constant current source (T1, Z1, R1 or T2, Z2, R2).

2. A circuit arrangement as claimed in Claim 1, characterised in that each bias arrangement is formed by a separate auxiliary constant current source (T3, Z3, R3 ; T4, Z4, R4) which comprises at least one transistor (T3 ; T4) in whose base circuit is arranged a bias producing device (Z3 ; Z4).

3. A circuit arrangement as claimed in Claim 2, characterised in that the transistors (T1, T3 ; T2, T4) of each constant current source and of the auxiliary constant current source connected thereto are formed by transistors which have the opposite conductivity type and have their bases and collectors respectively connected to one another in accordance with a four-layer semiconductor arrangement.

4. A circuit arrangement as claimed in Claim 2 or 3, characterised in that the bias producing devices are formed by Zener diodes (Z3, Z4).

5. A circuit arrangement as claimed in Claim 2 or 3, characterised in that the bias producing devices are formed by diode sections of at least two diodes (D41, D42 ; D31, D32, D33) connected parallel to one another with opposite polarity.

6. A circuit arrangement as claimed in Claim 5, characterised in that the diode sections (D31, D32, D33) which form a bias producing device are formed by a Darlington transistor (D3, D4).

7. A circuit arrangement as claimed in one of Claims 1 to 6, characterised in that the transistor (T1) of said one constant current source is connected to the telegraph signal output (A) at the emitter end, and that the transistor (T2) of said other constant current source is connected to the telegraph output (A) at the collector end by means of the bias element (Z1) of the first-mentioned constant current source.

8. A circuit arrangement as claimed in Claim 7, characterised in that a Zener diode (Z1), arranged as a bias element in the base circuit of the transistor (T1) of said one constant current source, is present in the connection between the collector side of the transistor (T2) of said other constant current source and the telegraph signal output (A).

9. A circuit arrangement as claimed in Claim 8, characterised in that the transistor (T4 in Fig. 3 ; T3 in Fig. 5) of the auxiliary constant current source, which is assigned to said other constant current source, has its emitter directly connected to the telegraph signal output (A) by means of an ohmic impedance (R4 and R3).

10. A circuit arrangement as claimed in one of Claims 1 to 9, characterised in that an opto-coupler (Oc) is provided as input signal feeding device.

11. A circuit arrangement as claimed in one of Claims 1 to 10, characterised in that it is provided in duplicate and that a transmission line (R$_L$) has its two wires connected to the two telegraph signal terminals (A, B).

12. A circuit arrangement as claimed in one of Claims 1 to 11, characterised in that at the base end a transistor (T1) assigned to said one constant current source (T1, Z1, R1), a voltage source (+ TB) is connected by means of a starting resistor (R5).

## Revendications

1. Montage pour convertir un signal d'entrée binaire en un signal télégraphique, comportant des sources de courant constant (T1, T2, R1 ou T2, Z2, R2), qui contiennent au moins un élément de polarisation (Z1, Z2) et au moins un transistor (T1 ou T2) avec un dispositif de polarisation particulier (T3, Z3, R3 ou T4, Z4, R4), un dispositif (Oc) d'envoi du signal d'entrée, qui applique le signal d'entrée à la base d'au moins l'un des transistors (T2), des tensions de service (+ TB, − TB) possédant des polarités différentes et qui sont appliquées aux sources de courant constant (T1, Z1, R1 ou T2, Z2, R2), et une sortie (A) du signal télégraphique, à laquelle sont reliées les sources de courant constant (T1, Z1, R1 ou T2, R2, Z2), caractérisé par le fait que le transistor (T1 ou T2) d'une source de courant constant (T1, Z1, R1 ou T2, Z2, R2) ainsi que son dispositif de polarisation (T3, Z3, R3 ou T4, Z4, R4) sont disposés uniquement entre une première borne de la tension de service (+ TB ou − TB) et la sortie (A) du signal télégraphique, et que le transistor (T2 ou T1), qui est relié au dispositif (Oc) d'envoi du signal d'entrée, de l'autre source de courant constant (T2, Z2, R2 ou T1, Z1, R1) ainsi que son dispositif de polarisation (T4, Z4, R4 ou T3, Z3, R3) sont branchés uniquement entre une seconde borne de tension de service (− TB ou + TB) et la sortie (A) du signal télégraphique, par l'intermédiaire de l'élément de polarisation (Z1 ou Z2) appartenant à la source de courant constant (T1, Z1, R1 ou T2, Z2, R2) indiquée en premier.

2. Montage suivant la revendication 1, caractérisé par le fait que chaque dispositif de polarisation est formé par une source particulière auxiliaire de courant constant (T3, Z3, R3 ; T4, Z4, R4) qui contient au moins un transistor (T3 ; T4), dans le circuit de base duquel se trouve situé un dispositif (Z3 ; Z4) de production d'une tension de polarisation.

3. Montage suivant la revendication 2, caractérisé par le fait que les transistors (T1, T3 ; T2, T4) de chaque source de courant constant et de la source de courant constant auxiliaire, reliée à cette dernière, sont formés par des transistors possédant un type de conductivité opposé qui sont reliés entre eux par leurs bases et leurs collecteurs respectivement conformément à un dispositif à semiconducteurs à quatre couches.

4. Montage suivant la revendication 2 ou 3, caractérisé par le fait que les dispositifs de production des tensions de polarisation sont formés par des diodes Zener (Z3, Z4).

5. Montage suivant la revendication 2 ou 3, caractérisé par le fait que les dispositifs de production des tensions de polarisation sont formés par des sections à diodes, comportant au moins deux diodes (D41, D42 ; D31, D32, D33) branchées en parallèle entre elles avec des polarités opposées.

6. Montage suivant la revendication 5, caractérisé par le fait que les sections à diodes (D31, D32, D33) constituant un dispositif de production d'une tension de polarisation, sont formées par un transistor en montage de Darlington (D3, D4).

7. Montage suivant l'une des revendications 1 à 6, caractérisé par le fait que le transistor (T1) de l'une desdites sources de courant constant est reliée du côté émetteur à la sortie (A) du signal télégraphique, et que le transistor (T2) de l'autre desdites sources de courant constant est reliée du côté collecteur, par l'intermédiaire de l'élément de polarisation (Z1) de la source de courant constant indiquée en premier, à la sortie (A) du signal télégraphique.

8. Montage suivant la revendication 7, caractérisé par le fait que dans la liaison entre le côté du collecteur du transistor (T2) de l'autre desdites sources de courant constant et la sortie (A) du signal télégraphique se trouve située une diode Zener (Z1) prévue dans le circuit de base du transistor (T1) de ladite première source de courant constant en tant qu'élément de polarisation.

9. Montage suivant la revendication 8, caractérisé par le fait que le transistor (T4 sur la figure 3 ; T3 sur la figure 5) de la source de courant constant auxiliaire associée à ladite autre source de courant constant, est relié directement par son émetteur et par l'intermédiaire d'une résistance ohmique (R4 ou R3), à la sortie (A) du signal télégraphique.

10. Montage suivant l'une des revendications 1 à 9, caractérisé par le fait qu'un optocoupleur (Oc) est prévu en tant que dispositif d'envoi du signal d'entrée.

11. Montage suivant l'une des revendications 1 à 10, caractérisé par le fait qu'il est prévu en double et qu'une ligne de transmission ($R_N$) est raccordée par ses deux conducteurs aux deux bornes (A, B), présentes au total, de transmission du signal télégraphique.

12. Montage suivant l'une des revendications 1 à 11, caractérisé par le fait qu'un transistor (T1), qui est associé à ladite première source de courant constant (T1, Z1, R1) est raccordé, du côté de sa base, par l'intermédiaire d'une résistance de démarrage (R5), à une source de tension (+ TB).

# FIG 1

# FIG 2

# FIG 3

FIG 4

FIG 5